# EUROPÄISCHE PATENTANMELDUNG

(11) **EP 1 403 555 A2**
(43) Veröffentlichungstag der Anmeldung: **31.03.2004**
(21) Anmeldenummer: 03018904.7
(22) Anmeldetag: 20.08.2003
(51) Int. Cl.: F16H 21/10

(54) **Betätigungseinrichtung**

(30) Priorität: 28.09.2002 DE 10245458
(71) Anmelder: Stabilus GmbH, D-56070 Koblenz (DE)
(72) Erfinder: Ritter, Andreas, Dipl.-Ing., 56206 Hilgert (DE)
(74) Vertreter: Klein, Thomas, Dipl.-Ing.

(57) **Zusammenfassung**

Die Erfindung bezieht sich auf eine Betätigungseinrichtung mit einem Basisteil und einem zu bewegenden Teil, das um eine Schwenkachse 3 schwenkbar an dem Basisteil angelenkt ist. Eine Antriebseinrichtung weist ein Seil auf, das zum Bewegungsantrieb des zu bewegenden Teils auf einer Seiltrommel aufwickelbar ist.
Die Antriebseinrichtung weist eine Zug-/Druckstange 11 auf, die mit ihrem einen Ende 12 an dem zu bewegenden Teil in einem Abstand zu der Schwenkachse 3 angelenkt ist und mit ihrem zweiten Ende 14 entlang einer sich etwa rechtwinklig zur Schwenkachse 3 erstreckenden Führungsbahn an dem Basisteil bewegbar geführt ist. Dabei ist das zweite Ende 10 der Zug-/Druckstange 11 von einem ersten Seil 13 zu einem ersten Ende der Führungsbahn und von einem zweiten Seil 14 zu einem zweiten Ende der Führungsbahn ziehbar.

## Beschreibung

Die Erfindung bezieht sich auf eine Betätigungseinrichtung mit einem Basisteil und einem zu bewegenden Teil, das um eine Schwenkachse schwenkbar an dem Basisteil angelenkt ist, mit einer Antriebseinrichtung, die ein Seil aufweist, das zum Bewegungsantrieb des zu bewegenden Teils auf einer Seiltrommel aufwickelbar ist.

Eine derartige Betätigungseinrichtung ist bei einem Kraftfahrzeug bekannt, wobei das zu bewegende Teil eine Klappe ist, die mittels einer elektromotorisch antreibbaren Seileinrichtung entgegen der Kraft eines Kolben- Zylinderaggregats aus einer Offenstellung in eine Schließstellung bewegbar ist. Die Bewegung der Klappe in Öffnungsrichtung erfolgt durch die Ausschubkraft des Kolben-Zylinderaggregats und ist somit nicht aktiv gesteuert.

Aufgabe der Erfindung ist es eine Betätigungseinrichtung der eingangs genannten Art zu schaffen, die bei einfachem Aufbau sowohl in Öffnungs- als auch in Schließrichtung aktiv ansteuerbar ist.

Diese Aufgabe wird erfindungsgemäß dadurch gelöst, daß die Antriebseinrichtung eine Zug-/Druckstange aufweist, die mit ihrem einen Ende an dem zu bewegenden Teil oder dem Basisteil in einem Abstand zu der Schwenkachse angelenkt ist und mit ihrem zweiten Ende entlang einer sich etwa rechtwinklig zur Schwenkachse erstreckenden Führungsbahn an dem Basisteil oder dem zu bewegenden Teil bewegbar geführt ist, wobei das zweite Ende der Zug-/Druckstange von einem ersten Seil zu einem ersten Ende der Führungsbahn und von einem zweiten Seil zu einem zweiten Ende der Führungsbahn ziehbar ist.

Durch diese Ausbildung ist das zu bewegende Teil sowohl in Schließrichtung als auch in Öffnungsrichtung aktiv ansteuerbar und mit einer gleichförmigen Bewegung antreibbar.

Dabei können dem ersten und dem zweiten Seil jeweils eine Seiltrommel zugeordnet sein, die die Seile auf- und abwickelbar gegenläufig antreibbar sind.

Dadurch, daß das zweite Ende der Zug-/Druckstange zwischen den beiden Seilen angeordnet ist, ist ein Voreilen dieses zweiten Endes in Richtung des jeweils ziehenden Seils durch ein kinematikbedingtes Antreiben des zu bewegenden Teils nicht möglich. Ein Seil zieht während das andere Seil bremst, da nur soviel Seil abgewickelt wird, wie auch aufgewickelt wird, so daß die Schließ- und Öffnungsbewegung sehr gleichförmig erfolgt.

Sind beide Seile zu einer gemeinsamen Seiltrommel geführt und gegenläufig auf der von der reversierbaren Antriebseinrichtung antreibbaren Seiltrommel auf- und abwickelbar, so wird der erforderliche Teile- und Bauraumaufwand reduziert.

Wenn das eine Seil um einen gewissen Betrag aufgewickelt wird, wird gleichzeitig das andere Seil um den gleichen Betrag abgewickelt und umgekehrt. Dies führt zu einer besonderen Gleichförmigkeit der Öffnungs- und Schließbewegung des zu bewegenden Teils.

Die eine oder beide Seiltrommeln können durch einen elektromotorischen Antrieb drehbar antreibbar sein.

Sind die Seiltrommel oder Seiltrommeln über Getriebe von dem oder den Antrieben drehbar antreibbar, so können der oder die Antriebe mit geringerer Kraft ausgelegt werden.

Der oder die Antriebe können in unterschiedlichen Positionen angeordnet sein, wenn das erste und/oder das zweite Seil über eine Umlenkrolle zu einer Seiltrommel geführt sind.

Sind das erste und/oder das zweite Seil flaschenzugartig um eine oder mehrere Umlenkrollen zu einer Seiltrommel geführt, so werden die benötigten Seilkräfte ein- oder mehrmals halbiert.

Das erste und/oder das zweite Seil kann die Seele eines Bowdenzugs sein.

Grundsätzlich kann die Führungsbahn jede Art Erstreckung besitzen, so daß entsprechend des Verlaufs der Führungsbahn eine Stellbewegung unlinearen Verlaufs erreicht werden kann. Die Führungsbahn kann aber auch eine etwa lineare Führungsbahn besitzen.

Zu einer Leichtgängigkeit der Verstellbewegung und Reduzierung der erforderlichen Stellkräfte führt es, wenn das zweite Ende der Zug-/Druckstange an einem Führungsschlitten angeordnet ist, der in einer Gleitführungsbahn entlang der Führungsbahn verschiebbar geführt ist.

Um eine Steuerung des Gesamtsystems der Betätigungseinrichtung zu erreichen, kann durch einen Sensor die Relativposition des zu bewegenden Teils zum Basisteil erfaßbar sein.

In einfacher Ausbildung ist der Sensor ein Drehstellungssensor, der vorzugsweise koaxial zur Schwenkachse des zu bewegenden Teils angeordnet ist.

Durch den Drehstellungssensor kann dabei die Schwenkposition des zu bewegenden Teils erfaßbar sein.

Eine andere, ebenfalls vorteilhafte Möglichkeit besteht darin, daß durch den Drehstellungssensor die Positionen der elektromotorischen Antriebe erfaßbar sind, wobei auch eine Integration des Drehstellungssensors in einen oder in beide elektromotorischen Antriebe möglich ist.

Alternativ zu einem Drehstellungssensor ist es auch möglich, daß der Sensor ein Linearstellungssensor ist, durch den die Position des zweiten Endes der Zug-/Druckstange erfaßbar ist.

Als Sensor kann jede Art von Positionssensor angewandt werden. Eine unempfindliche Ausbildung besteht dabei darin, daß der Sensor ein Potentiometer ist.

Ist die Seiltrommel über eine Kupplung von der Antriebseinrichtung drehbar antreibbar, wobei die Kupplung in dem Antrieb integriert sein kann, so kann bei nicht betriebenem Antrieb das zu bewegende Teil auch manuell bewegt werden.

Vorzugsweise ist die Kupplung eine elektromagnetische Kupplung.
Ist dabei die Kupplung in unbestromtem Zustand geöffnet und in bestromtem Zustand geschlossen, so ist bei unbestromten Antrieb oder bei Stromausfall die Seiltrommel ggf. mit einem vorgeschalteten Getriebe von einem Antriebsmotor getrennt.

Ein Stoppen und Halten des zu bewegenden Teils wird durch Bestromen der Kupplung bei gleichzeitig deaktiviertem elektromotorischen Antrieb realisiert.

Ist dabei die Antriebseinrichtung, insbesondere der elektromotorische Antrieb selbsthemmend, so wird bei deaktiviertem Antrieb die Seiltrommel und ggf. auch das Getriebe blockiert, so daß keines der beiden Seile abgewickelt werden kann. Damit ist auch das zweite Ende der Zug-/Druckstange und ggf. der Führungsschlitten und mit ihm das zu bewegende Teil in der momentanen Position blockiert.

Ist zwischen dem Basisteil und dem bewegbaren Teil ein Kraftspeicher angeordnet, so kann aufgrund eines Gewichtsausgleichs eine weitgehende Reduzierung der Betätigungskraft zum Verändern der Position des zu bewegenden Teils erreicht werden.

Zwischen dem Basisteil und dem bewegbaren Teil kann auch ein Feststellelement angeordnet sein, durch das bei unbetätigtem zu bewegenden Teil dieses Teil durch eine Haltekraft in seiner Position haltbar ist, wobei vorzugsweise durch Betätigung des zu bewegenden Teils die Haltekraft in seiner Position eliminierbar ist.

Die Funktionen der Betätigungseinrichtung bleiben bei einer manuellen Betätigung des zu bewegenden Teils ohne nennenswerte Einschränkungen aufrecht erhalten.
In einfacher Ausbildung ist dabei der Kraftspeicher oder das Feststellelement als Kolben-Zylindereinheit ausgebildet ist, wobei der Kolben mit dem beweglichen Teil und der Zylinder mit dem Basisteil oder der Kolben mit dem Basisteil und der Zylinder mit dem beweglichen Teil verbunden ist.

Besonders vorteilhaft anwendbar ist die Betätigungseinrichtung, wenn das Basisteil ein Karosserieteil und das zu bewegende Teil eine Klappe wie z.B. eine Fronthaube, eine Heckklappe oder eine Seitentür eines Kraftfahrzeugs ist.

Ausführungsbeispiele der Erfindung sind in der Zeichnung dargestellt und werden im folgenden näher beschrieben. Es zeigen
- Figur 1: einen schematischen Querschnitt einer Betätigungseinrichtung im Heckbereich eines Kraftfahrzeugs in der Seitenansicht
- Figur 2: einen schematischen Querschnitt einer Betätigungseinrichtung im Seitentürbereich eines Kraftfahrzeugs in der Seitenansicht
- Figur 3: eine Ansicht des Bereichs eines Führungsschlittens.

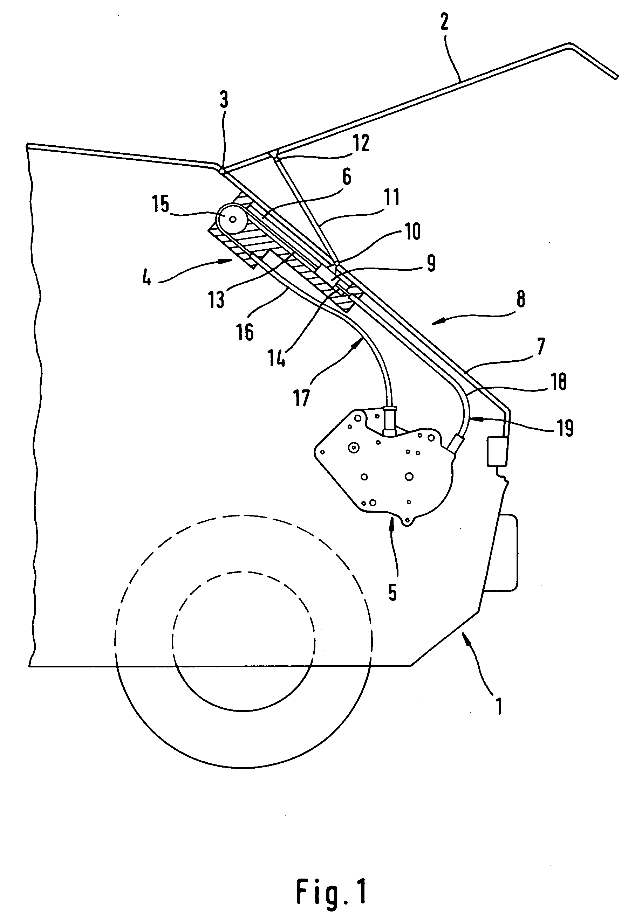

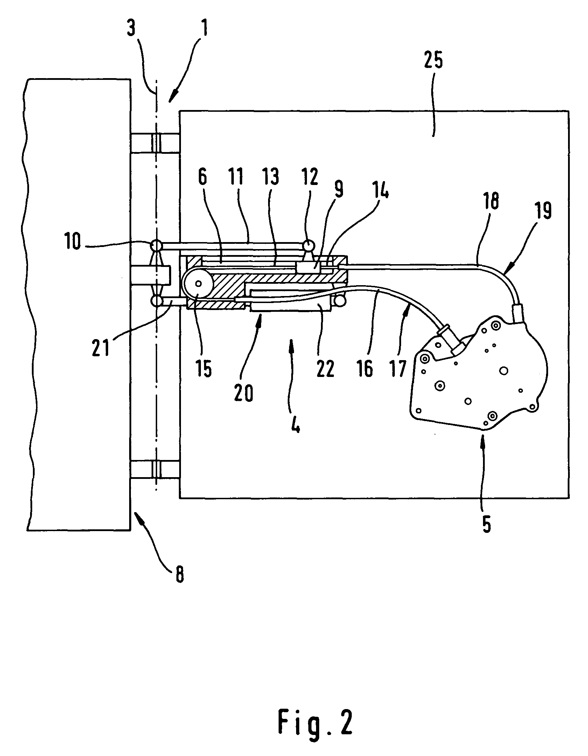

In den Figur 1 ist das Heck 1 und in Figur 2 die Seite eines Kraftfahrzeugs dargestellt, dessen Öffnung 8 durch eine Heckklappe 2 bzw. Seitentür 25 verschließbar ist, die um eine horizontale Schwenkachse 3 am oberen Öffnungsrand der Öffnung 8 schwenkbar angelenkt ist.

Eine Lineargleitführungseinheit 4 und eine Antriebseinheit 5 sind in Figur 1 an der Seitenwand der Karosserie und in Figur 2 an der Seitentür 25 angeordnet.

Die Lineargleitführungseinheit 4 besitzt eine Gleitführungsbahn 6, die sich in Figur 1 entlang dem seitlichen öffnungsrand 7 und der zu verschließenden Öffnung 8 erstreckt.

In der Gleitführungsbahn 6 ist ein Führungsschlitten 9 verschiebbar angeordnet. Das zweite Ende 10 einer Zug-/Druckstange 11 ist an dem Führungsschlitten 9 angelenkt, während das erste Ende 12 der sich etwa rechtwinklig zur Schwenkachse 3 erstreckenden Zug-/Druckstange 11 in einem Abstand zur Schwenkachse 3 an der Heckklappe 2 angelenkt ist.

An dem Führungsschlitten 9 ist ein erstes Seil 13 und ein zweites Seil 14 mit ihren einen Enden befestigt. Die Seile 13 und 14 erstrecken sich in entgegengesetzte Richtung entlang der Gleitführungsbahn 6 bis zu deren jeweiligem Ende von dem Führungsschlitten 9 weg.

Das erste Seil 13 ist an dem oberen Ende der Gleitführungsbahn 6 um eine Umlenkrolle 15 geführt und um 180° umgelenkt und bildet im weiteren die Seele eines mit einer flexiblen Hülle 16 versehenen Bowdenzuges 17, der zur Antriebseinheit 5 führt. Die Hülle 16 ist dabei mit ihren Enden an der Lineargleitführungseinheit 4 und an der Antriebseinheit 5 axial abgestützt.

Das zweite Seil 14 führt als Seele eines mit einer flexiblen Hülle 18 versehenen Bowdenzuges 19 zur Antriebseinheit 5, wobei die Enden der Hülle 18 ebenfalls an der Lineargleitführungseinheit 4 und an der Antriebseinheit 5 axial abgestützt sind.
Die zur Antriebseinheit 5 geführten Enden der Seile 13 und 14 sind gegenläufig auf einer gemeinsamen Seiltrommel auf- und abwickelbar, die über eine Getriebe und eine elektromagnetischen Kupplung von einem reversierbaren elektromotorischen Antrieb drehbar antreibbar ist. Seiltrommel, Getriebe, Kupplung und elektromotorischer Antrieb sind in dem Gehäuse der Antriebseinheit 5 angeordnet und nicht sichtbar.

In Figur 2 ist die Lineargleitführungseinheit 4 derart auf der Seitentür 25 angeordnet, daß sich die Gleitführungsbahn 6 etwa rechtwinklig zur Schwenkachse 3 der Seitentür 25 erstreckt. An dem in der Gleitführungsbahn 6 verschiebbar geführten Führungsschlitten 9 ist in einem je nach Stellung der Seitentür 25 sich ändernden Abstand die Zug-/Druckstange 11 mit ihrem ersten Ende 12 angelenkt, während sie mit ihrem zweiten Ende um die Schwenkachse 3 schwenkbar an dem oberen waagrechten Rand der Öffnung 8 angelenkt ist.

Ein erstes und ein zweites Seil 13 und 14 sind in gleicher Weise wie in Figur 1 zu der ebenfalls in gleicher Weise aufgebauten Antriebseinheit 5 geführt.

Zusätzlich ist eine als Kolben-Zylindereinheit ausgebildetes Feststellelement 20 parallel zur Erstreckung der Gleitführungsbahn 6 an der Lineargleitführungseinheit 4 angeordnet, deren aus dem Zylinder 22 herausragende Kolbenstange 21 mit ihrem freien Ende um die Schwenkachse 3 schwenkbar an dem oberen waagrechten Rand der Öffnung 8 angelenkt ist. Das dem freien Ende der Kolbenstange 21 entgegengesetzte Ende des Zylinders 22 ist an der Lineargleitführungseinheit 4 angelenkt.

Zur Betätigung der Seitentür 25 wird der elektromotorische Antrieb bestromt und die Kupplung geschlossen, so daß die Seiltrommel sich um ihre Drehachse dreht. Dadurch wird z.B. der sich in beiden Ausführungsbeispielen in einem Endbereich der Gleitführungsbahn 6 befindliche Führungsschlitten 9 von dem ersten Seil 13 zu dem anderen Endbereich der Gleitführungsbahn 6 gezogen, wobei die Seiltrommel das erste Seil 13 aufwickelt und das zweite Seil 14 im gleichen Maß abwickelt.

Über die Zug-/Druckstange 11 wird dabei die Seitentür 25 weiter geöffnet.

Bei umgekehrter Drehrichtung der Seiltrommel erfolgt in gleicher Weise ein Schließen der Seitentür 25.

Wird in einer Zwischenstellung der Heckklappe 2 die Bestromung des elektromotorischen Antriebs beendet, bleibt in Figur 1 die Kupplung geschlossen, so daß die Heckklappe 2 durch den selbsthemmend ausgeführten elektromotorischen Antrieb in ihrer eingenommenen Stellung gehalten wird.

In Figur 2 erfolgt bei Beendigung der Bestromung des elektromotorischen Antriebs auch ein Öffnen der Kupplung. Das Beibehalten der eingenommenen Stellung der Seitentür 25 wird dann durch das Feststellelement 20 gesichert.

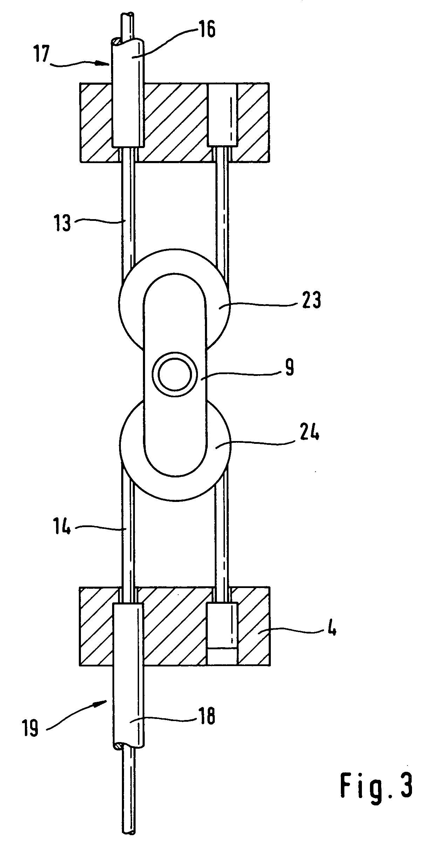

In Figur 3 sind die Enden des ersten und zweiten Seils 13 und 14 jeweils an einem Ende der Gleitführungsbahn 6 an der Lineargleitführungseinheit 4 befestigt. Die Seile 13 und 14 sind von da aus zum Führungsschlitten 9 geführt und jeweils um eine Umlenkrolle 23 und 24 des Führungsschlittens 9 geführt und um 180° umgelenkt. Im weiteren verlaufen die Seile 13 und 14 wie in den Figuren 1 und 2 über Bowdenzüge 17 und 19 zur Antriebseinheit 5.
Durch die flaschenzugartige Führung der Seile 13 und 14 wird eine Halbierung der an den Seilen 13 und 14 aufzubringenden Zugkräfte erreicht.

### Bezugszeichenliste

- 1: Heck
- 2: Heckklappe
- 3: Schwenkachse
- 4: Lineargleitführungseinheit
- 5: Antriebseinheit
- 6: Gleitführungsbahn
- 7: Öffnungsrand
- 8: Öffnung
- 9: Führungsschlitten
- 10: zweites Ende
- 11: Zug-/Druckstange
- 12: erstes Ende
- 13: erstes Seil
- 14: zweites Seil
- 15: Umlenkrolle
- 16: Hülle
- 17: Bowdenzug
- 18: Hülle
- 19: Bowdenzug
- 20: Feststellelement
- 21: Kolbenstange
- 22: Zylinder
- 23: Umlenkrolle
- 24: Umlenkrolle
- 25: Seitentür

## Patentansprüche

1. Betätigungseinrichtung mit einem Basisteil und einem zu bewegenden Teil, das um eine Schwenkachse schwenkbar an dem Basisteil angelenkt ist, mit einer Antriebseinrichtung, die ein Seil aufweist, das zum Bewegungsantrieb des zu bewegenden Teils auf einer Seiltrommel aufwickelbar ist, **dadurch gekennzeichnet, daß** die Antriebseinrichtung eine Zug-/Druckstange (11) aufweist, die mit ihrem einen Ende (12) an dem zu bewegenden Teil oder dem Basisteil in einem Abstand zu der Schwenkachse (3) angelenkt ist und mit ihrem zweiten Ende (10) entlang einer sich etwa rechtwinklig zur Schwenkachse (3) erstreckenden Führungsbahn an dem Basisteil oder dem zu bewegenden Teil bewegbar geführt ist, wobei das zweite Ende (10) der Zug-/Druckstange (11) von einem ersten Seil (13) zu einem ersten Ende der Führungsbahn und von einem zweiten Seil (14) zu einem zweiten Ende der Führungsbahn ziehbar ist.

2. Betätigungseinrichtung nach Anspruch 1, **dadurch gekennzeichnet, daß** dem ersten und dem zweiten Seil jeweils eine Seiltrommel zugeordnet ist, die die Seile auf- und abwickelbar gegenläufig antreibbar sind.

3. Betätigungseinrichtung nach Anspruch 1, **dadurch gekennzeichnet, daß** beide Seile (13, 14) zu einer gemeinsamen Seiltrommel geführt und gegenläufig auf der von der reversierbaren Antriebseinrichtung antreibbaren Seiltrommel auf- und abwickelbar sind.

4. Betätigungseinrichtung nach einem der vorhergehenden Ansprüche, **dadurch gekennzeichnet, daß** eine oder beide Seiltrommeln durch einen elektromotorischen Antrieb drehbar antreibbar sind.

5. Betätigungseinrichtung nach einem der vorhergehenden Ansprüche, **dadurch gekennzeichnet, daß** die Seiltrommel oder Seiltrommeln über Getriebe von dem oder den Antrieben drehbar antreibbar sind.

6. Betätigungseinrichtung nach einem der vorhergehenden Ansprüche, **dadurch gekennzeichnet, daß** das erste und/oder das zweite Seil (13) über eine Umlenkrolle (15) zu einer Seiltrommel geführt sind.

7. Betätigungseinrichtung nach Anspruch 6, **dadurch gekennzeichnet, daß** das erste und/oder das zweite Seil (13, 14) flaschenzugartig um eine oder mehrere Umlenkrollen (23, 24) zu einer Seiltrommel geführt sind.

8. Betätigungseinrichtung nach einem der vorhergehenden Ansprüche, **dadurch gekennzeichnet, daß** das erste und/oder das zweite Seil (13, 14) ein Bowdenzug (17, 19) ist.

9. Betätigungseinrichtung nach einem der vorhergehenden Ansprüche, **dadurch gekennzeichnet, daß** die Führungsbahn eine etwa lineare Führungsbahn ist.

10. Betätigungseinrichtung nach einem der vorhergehenden Ansprüche, **dadurch gekennzeichnet, daß** das zweite Ende (10) der Zug-/Druckstange (11) an einem Führungsschlitten (9) angeordnet ist, der in einer Gleitführungsbahn (6) entlang der Führungsbahn verschiebbar geführt ist.

11. Betätigungseinrichtung nach einem der vorhergehenden Ansprüche, **dadurch gekennzeichnet, daß** durch einen Sensor die Relativposition des zu bewegenden Teils zum Basisteil erfaßbar ist.

12. Betätigungseinrichtung nach den Anspruch 11,**dadurch gekennzeichnet, daß** der Sensor ein Drehstellungssensor ist.

13. Betätigungseinrichtung nach Anspruch 12, **dadurch gekennzeichnet, daß** durch den Drehstellungssensor die Schwenkposition des zu bewegenden Teils erfaßbar ist.

14. Betätigungseinrichtung nach den Ansprüchen 4 und 12, **dadurch gekennzeichnet, daß** durch den Drehstellungssensor die Positionen der elektromotorischen Antriebe erfaßbar sind.

15. Betätigungseinrichtung nach Anspruch 11, **dadurch gekennzeichnet, daß** der Sensor ein Linearstellungssensor ist, durch den die Position des zweiten Endes der Zug-/Druckstange erfaßbar ist.

16. Betätigungseinrichtung nach einem der Ansprüche 11 bis 15, **dadurch gekennzeichnet, daß** der Sensor ein Potentiometer ist.

17. Betätigungseinrichtung nach einem der vorhergehenden Ansprüche, **dadurch gekennzeichnet, daß** die Seiltrommel über eine Kupplung von der Antriebseinrichtung drehbar antreibbar ist.

18. Betätigungseinrichtung nach Anspruch 17, **dadurch gekennzeichnet, daß** die Kupplung eine elektromagnetische Kupplung ist.

19. Betätigungseinrichtung nach Anspruch 18, **dadurch gekennzeichnet, daß** die Kupplung in unbestromtem Zustand geöffnet und in bestromtem Zustand geschlossen ist.

20. Betätigungseinrichtung nach einem der vorhergehenden Ansprüche, **dadurch gekennzeichnet, daß** die Antriebseinrichtung, insbesondere der elektromotorische Antrieb, selbsthemmend ist.

21. Betätigungseinrichtung nach einem der vorhergehenden Ansprüche, **dadurch gekennzeichnet, daß** zwischen dem Basisteil und dem bewegbaren Teil ein Kraftspeicher angeordnet ist.

22. Betätigungseinrichtung nach einem der Ansprüche 1 bis 20, **dadurch gekennzeichnet, daß** zwischen dem Basisteil und dem bewegbaren Teil ein Feststellelement angeordnet ist, durch das bei unbetätigtem zu bewegenden Teil dieses Teil durch eine Haltekraft in seiner Position haltbar ist.

23. Betätigungseinrichtung nach Anspruch 22, **dadurch gekennzeichnet, daß** durch Betätigung des zu bewegenden Teils die Haltekraft eliminierbar ist.

24. Betätigungseinrichtung nach einem der Ansprüche 21 bis 23, **dadurch gekennzeichnet, daß** der Kraftspeicher oder das Feststellelement (20) als Kolben-Zylindereinheit ausgebildet ist, wobei der Kolben mit dem beweglichen Teil und der Zylinder mit dem Basisteil oder der Kolben mit dem Basisteil und der Zylinder (22) mit dem beweglichen Teil verbunden ist.

25. Betätigungseinrichtung nach einem der vorhergehenden Ansprüche, **dadurch gekennzeichnet, daß** das Basisteil ein Karosserieteil und das zu bewegende Teil eine Klappe wie eine Fronthaube, eine Heckklappe (2) oder eine Seitentür (25) eines Kraftfahrzeugs ist.
